(19) Europäisches Patentamt
European Patent Office
Office européen des brevets

(11) **EP 3 416 332 B1**

(12) **EUROPEAN PATENT SPECIFICATION**

(45) Date of publication and mention
of the grant of the patent:
**08.04.2020   Bulletin 2020/15**

(51) Int Cl.:
***H04L 9/08*** *(2006.01)*

(21) Application number: **18154870.2**

(22) Date of filing: **02.02.2018**

(54) **QUANTUM COMMUNICATION DEVICE, QUANTUM COMMUNICATION SYSTEM AND QUANTUM COMMUNICATION METHOD**

QUANTENKOMMUNIKATIONSVORRICHTUNG, QUANTENKOMMUNIKATIONSSYSTEM UND QUANTENKOMMUNIKATIONSVERFAHREN

DISPOSITIF, SYSTÈME ET PROCÉDÉ DE COMMUNICATION QUANTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **13.06.2017   JP 2017116219**

(43) Date of publication of application:
**19.12.2018   Bulletin 2018/51**

(73) Proprietor: **KABUSHIKI KAISHA TOSHIBA**
**Minato-ku**
**Tokyo**
**105-8001 (JP)**

(72) Inventors:
• **DIXON, Alex**
  **Tokyo, 105-8001 (JP)**
• **DOI, Kazuaki**
  **Tokyo, 105-8001 (JP)**

(74) Representative: **Moreland, David**
**Marks & Clerk LLP**
**Aurora**
**120 Bothwell Street**
**Glasgow G2 7JS (GB)**

(56) References cited:
**JP-A- 2011 166 292     US-A1- 2007 071 245**

• **ANASTASE NAKASSIS , JOSHUA BIENFANG, CARL WILLIAMS: "Expeditious Reconciliation for Practical Quantum Key Distribution", SPIE, PO BOX 10 BELLINGHAM WA 98227-0010 USA, 24 August 2004 (2004-08-24), XP040185453,**
• **SUNGSIK YOON ET AL: "Efficient information reconciliation with turbo codes over the quantum channel", 2013 INTERNATIONAL CONFERENCE ON ICT CONVERGENCE (ICTC), IEEE, 14 October 2013 (2013-10-14), pages 1091-1092, XP032527254, DOI: 10.1109/ICTC.2013.6675563 [retrieved on 2013-11-25]**

**EP 3 416 332 B1**

**Description**

FIELD

The present disclosure relates to a quantum communication device, a quantum communication system, and a quantum communication method.

BACKGROUND

Developments in the information communication technology made it possible to send and receive various types of data. Accordingly, ensuring privacy and security in transmitting information has become of greater importance. Quantum cryptography has been introduced in communication technology as an encryption scheme that is unbreakable even if computers have enough computing power, and many efforts have been made for its practical implementation. One of the efforts to practically implement the quantum cryptography in the communication technology is, for example, to study error correction technologies, and various types of error correction technologies have been developed. Among them, low-density parity-check (LDPC) codes have recently attracted attention as an error correction code that has an error correction capability very close to the theoretical maximum (the Shannon limit).

In the conventional technologies, however, it is difficult to prevent lowering of the generation rate of a cryptographic key if error correction occurs frequently.

US2007071245 describes methods and systems for communicating over a quantum channel. Because the cipher bits used to select the quantum bases used by both Alice and Bob are known by both parties, the method allows the final cryptographic key to be distributed with full basis alignment compared to 50% for BB84, thus allowing efficient quantum key distribution over multiple hops.

JP2011166292 describes a signal processing system which includes a first communication instrument and a second communication instrument connected with the first communication instrument by at least two communication means. The communication means comprise a first communication means having at least a framing function and a second communication means having a retransmission control function or an error correction function or both of them. At least one of the first communication instrument and the second communication instrument switches the communication means by referring to communication contents.

Nakassis et al, "Expeditious reconciliation for practical quantum key distribution", SPIE, PO Box 10 Bellingham EA 98227-0010 USA describes algorithmic and environmental modifications to the extant reconciliation algorithms within the BB84 protocol so as to speed up reconciliation and privacy amplification.

Yoon et al, "Efficient information reconciliation with turbo codes over the quantum channel", 2013 International Conference on ICT Convergence (ICTC) IEEE, pages 1091-1092, describes an error correcting protocol in quantum key distribution.

BRIEF DESCRIPTION OF THE DRAWINGS

FIG. 1 is a diagram illustrating an example device configuration of a quantum communication system according to a first arrangement;
FIG. 2 is a diagram illustrating an example functional configuration of the quantum communication system according to the first arrangement;
FIG. 3 is a flowchart illustrating an example retransmission control process according to the first arrangement;
FIG. 4 is a diagram illustrating an example functional configuration of a quantum communication system according to a second arrangement;
FIG. 5 is a flowchart illustrating an example retransmission control process according to the second arrangement; and
FIG. 6 is a diagram illustrating an example hardware configuration of main units of a transmitting device and a receiver according to the first and the second arrangements.

DETAILED DESCRIPTION

According to an arrangement, a quantum communication device is provided as recited in claim 1.

The following describes arrangements of a quantum communication device, a quantum communication system, and a quantum communication method with reference to the accompanying drawings.

First Arrangement

Described first is a first arrangement.

Example Device Configuration

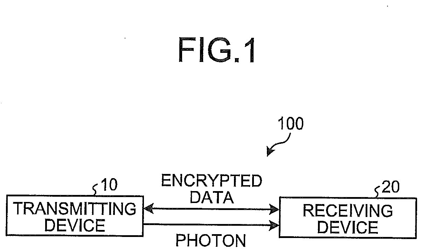

FIG. 1 is a diagram illustrating an example device configuration of a quantum communication system 100 according to the first arrangement. The quantum communication system 100 according to the first arrangement includes two quantum communication devices (a transmitting device 10 and a receiver 20). The transmitting device 10 sequentially transmits photons indicating quantum bits to the receiver 20. For convenience of explanation, the device that transmits photons is referred to as the transmitting device 10 in the first arrangement, but the transmitting device 10 may include a function of receiving photons. In the same manner, the receiver 20 may include a function of transmitting photons.

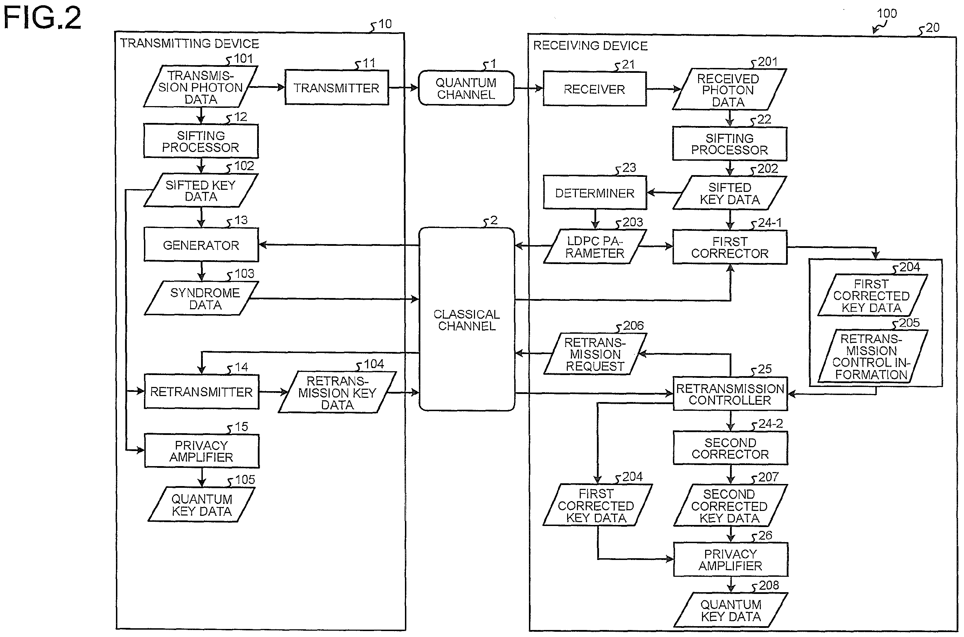

The transmitting device 10 and the receiver 20 transmit and receive encrypted data using quantum key data. The method of generating quantum key data will be described in detail below with reference to FIG. 2.

Example Functional Configuration

FIG. 2 is a diagram illustrating an example functional configuration of the quantum communication system 100 according to the first arrangement. The quantum communication system 100 according to the first arrangement includes the transmitting device 10 and the receiver 20.

The transmitting device 10 and the receiver 20 are connected with each other through a quantum channel 1. The quantum channel 1 is an optical fiber through which transmission photon data 101 indicating a quantum bit string is transmitted. The quantum channel 1 conveys single photons that are very weak light particles, thus susceptible to disturbance.

The transmitting device 10 and the receiver 20 are connected with each other through a classical channel 2. The classical channel 2 is a control channel through which control information for generating quantum key data 105 (208) is transmitted and received. As illustrated in FIG. 2, for example, the control information includes an LDPC parameter 203, syndrome data 103, a retransmission request 206, and retransmission key data 104. The classical channel 2 may be a wired channel or a wireless channel, and may be implemented by both wired and wireless channels.

The transmitting device 10 includes a transmitter 11, a sifting processor 12, a generator 13, a retransmitter 14, and a privacy amplifier 15.

The receiver 20 includes a receiver 21, a sifting processor 22, a determiner 23, a first corrector 24-1, a second corrector 24-2, a retransmission controller 25, and a privacy amplifier 26.

The transmitter 11 transmits the transmission photon data 101 to the receiver 21 through the quantum channel 1. The quantum bits configuring the transmission photon data 101 are each expressed by one of a plurality of bases using the quantum states of the photon. For the bases, properties of the photon such as its polarization or phase are used.

The receiver 21 receives the transmission photon data 101 from the transmitter 11 through the quantum channel 1, thereby acquiring received photon data 201.

The sifting processor 22 performs a sifting process in which the sifting processor 22 refers to the received photon data 201 for each certain bit string in reference bases randomly selected from a plurality of bases and acquires sifted key data 202 (received key data). The sifting processor 22 inputs the sifted key data 202 to the determiner 23 and to the first corrector 24-1.

Meanwhile, the sifting processor 12 in the transmitting device 10 performs the sifting process on the transmission photon data 101 and acquires sifted key data 102. The sifting processor 12 inputs the sifted key data 102 to the generator 13 and to the privacy amplifier 15. When the retransmitter 14 receives a retransmission request 206 from the receiver 20, the sifting processor 12 inputs data, out of the sifted key data 102, specified by the retransmission request 206 to the retransmitter 14.

Upon reception of the sifted key data 202 from the sifting processor 22, the determiner 23 in the receiver 20 determines an LDPC parameter 203 for use in error correction on the sifted key data 202. The LDPC parameter 203 may be determined by any method. The determiner 23 determines the LDPC parameter 203 by using, for example, an error rate of the previously received sifted key data 202 computed in the previous error correction. The determiner 23 transmits the LDPC parameter 203 to the generator 13 in the transmitting device 10 through the classical channel 2.

The generator 13 in the transmitting device 10 receives the LDPC parameter 203 from the determiner 23 in the receiver 20 and receives the sifted key data 102 from the sifting processor 12. The generator 13 generates syndrome data 103 from the sifted key data 102 by using the LDPC parameter 203. The generator 13 transmits the syndrome data 103 to the first corrector 24-1 in the receiver 20 through the classical channel 2.

The first corrector 24-1 in the receiver 20 receives the syndrome data 103 from the generator 13 in the transmitting device 10, receives the LDPC parameter 203 from the determiner 23, and receives the sifted key data 202 from the sifting processor 22.

The first corrector 24-1 divides the sifted key data 202 into one or more error correction blocks and performs error correction on each error correction block. The first corrector 24-1 is implemented by, for example, an LDPC decoder. The first corrector 24-1 uses the syndrome data 103 and the LDPC parameter 203 to perform error correction on the sifted key data 202 (one or more error correction blocks), thereby generating first corrected key data 204 and retransmission control information 205.

The first corrected key data 204 is binary data converted from a posterior value (analog value) of the sifted key data 202. The posterior value is computed upon execution of error correction (LDPC decoding). The posterior value is a log-likelihood ratio between a posterior probability that the data included in the sifted key data 202 is 1 and a posterior probability that the data included in the sifted key data 202 is 0, as a result of LDPC decoding. When the posterior value is positive, the probability that the data is 1 is higher, whereas when the posteriori value is negative, the probability that the data is 0 is higher. When the posterior value is zero or greater, the first corrector 24-1 sets the data corresponding to the posterior value to be 1, and when the posterior value is smaller than zero, the first corrector 24-1 sets the data corresponding to the posterior value to be 0, and generates the first corrected key data 204 from the sifted key data 202.

The retransmission control information 205 is information for use in retransmission control of the retransmission controller 25. The retransmission control information 205 includes, for example, success/failure information and an error rate.

The success/failure information indicates success or failure in error correction for each error correction block. For example, the success/failure information indicates success when it is 1, and indicates failure when it is 0. The error rate indicates the error rate of the sifted key data 202. The error rate of the sifted key data 202 is computed by comparing the first corrected key data 204 with the sifted key data 202 when the error correction on the one or more error correction blocks is successfully performed.

The first corrector 24-1 inputs the first corrected key data 204 and the retransmission control information 205 to the retransmission controller 25.

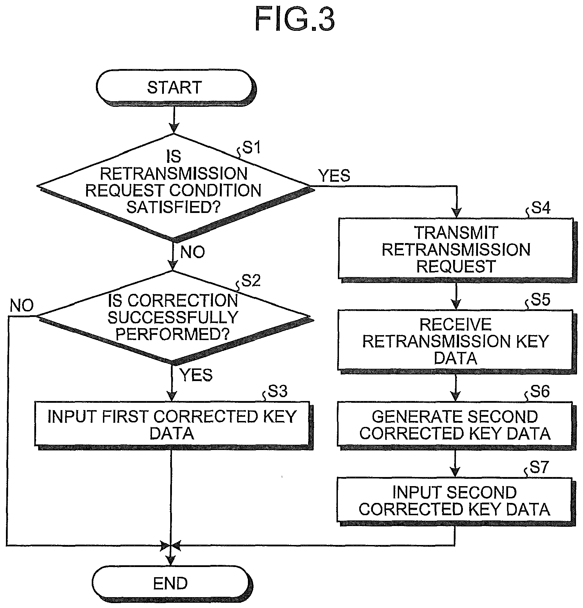

The retransmission controller 25 receives the first corrected key data 204 and the retransmission control information 205 from the first corrector 24-1. The retransmission controller 25 refers to the retransmission control information 205 to determine whether a retransmission request condition is satisfied. Details of the retransmission request condition will be described later with reference to FIG. 3.

When the retransmission request condition is not satisfied and when all the error correction blocks that are the divided portions of the sifted key data 202 are successfully error corrected, the retransmission controller 25 inputs the first corrected key data 204 to the privacy amplifier 26.

When the retransmission request condition is satisfied, the retransmission controller 25 transmits the retransmission request 206 to the transmitting device 10 through the classical channel 2.

The retransmission request 206 includes retransmission target address information. The retransmission target address information according to the first arrangement indicates the entire address of each unsuccessfully error corrected block.

Upon reception of the retransmission request 206 from the retransmission controller 25 in the receiver 20, the retransmitter 14 in the transmitting device 10 acquires data specified by the retransmission target address information included in the retransmission request 206 from the sifted key data 102 and transmits the data to the retransmission controller 25 as retransmission key data 104.

Upon reception of the retransmission key data 104 from the transmitting device 10 through the classical channel 2, the retransmission controller 25 inputs the retransmission key data 104 and the first corrected key data 204 to the second corrector 24-2.

Upon reception of the retransmission key data 104 and the first corrected key data 204 from the retransmission controller 25, the second corrector 24-2 replaces data (error correction blocks in the first arrangement) corresponding to the retransmission target address information with the retransmission key data 104, thereby correcting the first corrected key data 204. The second corrector 24-2 inputs second corrected key data 207, which is generated by correcting the first corrected key data 204, to the privacy amplifier 26.

Although FIG. 2 illustrates the first corrector 24-1 and the second corrector 24-2 as units for performing error correction, the first corrector 24-1 and the second corrector 24-2 may be implemented by a single corrector.

Upon reception of the first corrected key data 204 from the retransmission controller 25, the privacy amplifier 26 performs privacy amplification on the first corrected key data 204 and generates quantum key data 208. In the same manner, upon reception of the second corrected key data 207 from the second corrector 24-2, the privacy amplifier 26 performs privacy amplification on the second corrected key data 207 and generates the quantum key data 208.

The privacy amplification is a process of amplifying privacy in generating the quantum key data 208 by compressing the first corrected key data 204 or the second corrected key data 207.

Meanwhile, upon reception of the sifted key data 102 from the sifting processor 12, the privacy amplifier 15 in the transmitting device 10 performs privacy amplification on the sifted key data 102 and generates quantum key data 105 that is identical to the quantum key data 208.

FIG. 3 is a flowchart illustrating an example retransmission control process according to the first arrangement. First, the retransmission controller 25 determines whether the retransmission request condition is satisfied (Step S1). Details of the retransmission request condition will be described later.

If the retransmission request condition is not satisfied (No at Step S1), the retransmission controller 25 determines whether all the error correction blocks that are the divided portions of the sifted key data 202 have been successfully error corrected (Step S2).

If all the error correction blocks have been successfully error corrected (Yes at Step S2), the retransmission controller 25 inputs the first corrected key data 204 to the privacy amplifier 26 (Step S3).

If not all the error correction blocks have been successfully error corrected (No at Step S2), the procedure is ended. In this case, the first corrected key data 204 is not input to the privacy amplifier 26, and the sifted key data 102 is not input to the privacy amplifier 15. In other words, when the error correction is unsuccessfully performed and the retransmission request condition is not satisfied, the procedure is ended.

If the retransmission request condition is satisfied (Yes at Step S1), the retransmission controller 25 transmits the retransmission request 206 to the transmitting device 10 through the classical channel 2 (Step S4). The retransmission controller 25 then receives the retransmission key data 104 from the transmitting device 10 through the classical channel 2 (Step S5). The second corrector 24-2 replaces data of unsuccessfully error corrected blocks included in the first corrected key data 204 with the retransmission key data 104 to generate second corrected key data 207 (Step S6). The second corrector 24-2 inputs the second corrected key data 207 to the privacy amplifier 26 (Step S7).

Described next are details of the retransmission request condition. The retransmission request condition includes, for example, Conditions (1) and (2) below.

Condition (1): There is an error correction block that has been unsuccessfully error corrected.

Condition (2): The sum of data lengths of the retransmission key data 104 is smaller than a certain value.

Description of Condition (1)

Condition (1) is a retransmission request condition that can be used in, for example, automatic repeat request (ARQ) protocols. Using Condition (1) as the retransmission request condition can reduce the probability of failure in error correction, thereby preventing lowering of the key generation rate caused by the correction failure. In particular, this configuration has a significant improving effect in executing an error correction instruction compared to a case in which data is divided into a plurality of error correction blocks and, when not all of the error correction blocks are successfully error corrected, the entire first corrected key data 204 is discarded.

Suppose that, for example, the first corrector 24-1 divides the sifted key data 202 into ten error correction blocks upon execution of an error correction instruction and transmits the sifted key data 202 to the privacy amplifier 26 only when all of the error correction blocks are successfully error corrected. In this case, when Condition (1) is not used in the retransmission control scheme, the entire data of the ten error corrected blocks is discarded upon failure in error correction on a single block.

Meanwhile, when Condition (1) is used in the retransmission control scheme, the second corrector 24-2 replaces data of unsuccessfully error corrected blocks included in the first corrected key data 204 with the retransmission key data 104 and generates the second corrected key data 207, and the second corrected key data 207 is transmitted to the privacy amplifier 26. The retransmission key data 104 is transmitted through the classical channel 2, and thus the retransmission key data 104 is publicized in a common network. In this regard, the privacy amplifier 26 increases the compression rate in the privacy amplification in accordance with the data length of the retransmission key data 104, thereby ensuring privacy of the quantum key data 208.

Description of Condition (2)

Condition (2) relates to the size of data publicly transmitted in the classical channel 2 in executing the error correction and to a compression rate in the privacy amplification. In the error correction according to the first arrangement, the syndrome data 103 and the retransmission key data 104 are transmitted through the classical channel 2, and thus the syndrome data 103 and the retransmission key data 104 are publicized.

The compression rate in the privacy amplification increases as the amount of data publicly transmitted is larger, and when the amount of data equates to a certain value T or greater, the compression rate will be zero or below zero. Let the data length of public data with which the compression rate in privacy amplification will be zero be L, and let the syndrome length in error correction be S, the certain value T is expressed as L - S. The data length L of the public data is determined in accordance with the error rate of the sifted key data 202.

In the first arrangement, the data length of the retransmission key data 104 is a sum of data lengths of all the data of the unsuccessfully error corrected blocks. When the sum is smaller than the certain value T, the retransmission controller 25 performs the retransmission process, whereas when the sum is the certain value T or greater, the retransmission controller 25 does not perform the retransmission process.

Adding Condition (2) to Condition (1) can prevent the retransmission controller 25 from performing useless retransmission processes, thereby increasing the generation rate of the quantum key data 208.

When, for example, most of the ten error correction blocks are incorrect and the retransmission process is performed, the data length L of the public data will be large. Thus, the compression rate in the privacy amplification will be zero or below zero, which will make the retransmission process useless, and thus, the retransmission controller 25 does not perform the retransmission process.

Described next is the detail of the computation method of the certain value T. Lucamarini discloses the following Equation (1) as an equation for computing a compression rate r for use in privacy amplification.

$$r = H_{\xi_{PE}}(A \mid E) - (leak_{EC} + \Delta)/n \qquad (1)$$

The first term on the right-hand side of Equation (1) indicates to which extent the eavesdropper eavesdrops on the transmission photon data 101 transmitted from the transmitter 11. When the first term on the right-hand side of Equation (1) is zero, it indicates that the eavesdropper eavesdrops on all the transmission photon data 101. When the first term on the right-hand side of Equation (1) is one, it indicates that the eavesdropper eavesdrops on no transmission photon data 101. The first term on the right-hand side of Equation (1) is computed based on, for example, an error rate of the sifted key data 202, and is closer to zero as the error rate increases.

The term $leak_{EC}$ in Equation (1) accounts for the amount of data publicly transmitted through the classical channel 2 during error correction. As described above, in the first arrangement, the syndrome data 103 and the retransmission key data 104 are publicly transmitted through the classical channel 2. The amount of $leak_{EC}$ increases as the sum of the data length of the syndrome data 103 and the data length of the retransmission key data 104 increases, which results in a smaller compression rate r.

In Equation (1), $\Delta$ represents data indicating the finite length effect of the quantum key data 208. An error rate Q of the sifted key data 202 can be obtained by comparing the error correction blocks that are successfully error corrected with data corresponding to these error correction blocks in the sifted key data 202. Once the error rate Q of the sifted key data is obtained, the value of $leak_{EC}$ and the data length L with which the compression rate r will be zero can be obtained from Equation (1) and the error rate Q. Thus, the certain value T can be obtained from L - S as described above.

The retransmission controller 25 may use, for example, Condition (1) as the retransmission request condition. The retransmission controller 25 may use, for example, both Conditions (1) and (2) as the retransmission request condition.

The error correction in the first arrangement is described as decoding of LDPC codes, for example, but the error correction is not limited to LDPC decoding. The error correction may be, for example, decoding of Bose-Chaudhuri-Hocquenghem (BCH) codes or decoding of Reed-Solomon (RS) codes.

As described above, in the receiver 20 (quantum communication device) according to the first arrangement, the first corrector 24-1 performs error correction on the sifted key data 202 (received key data) received from the transmitting device 10 through the quantum channel 1 and generates the first corrected key data 204. When the retransmission request condition is satisfied, the retransmission controller 25 transmits the retransmission request 206 including the retransmission target address information (in the first arrangement, the entire address of each error correction block that has been unsuccessfully error corrected) to the transmitting device 10 through the classical channel 2 (control channel), and receives the retransmission key data 104 corresponding to the retransmission target address information from the transmitting device 10 through the classical channel 2. The second corrector 24-2 replaces corrected key data corresponding to the retransmission target address information with the retransmission key data 104, thereby correcting the first corrected key data 204.

The first corrector 24-1 and the second corrector 24-2 may be implemented by a single corrector.

The receiver 20 according to the first arrangement can prevent lowering of the generation rate of a cryptographic key if failures in error correction occur frequently.

Second Arrangement

Described next is a second arrangement. In the description of the second arrangement, explanations similar to the first arrangement are omitted and differences from the first arrangement are described. In the first arrangement, the whole data of unsuccessfully error corrected blocks is retransmitted. In the second arrangement, however, the retransmission key data 104 to be retransmitted does not include the whole data of the unsuccessfully error corrected blocks, but includes part of data included in the unsuccessfully error corrected blocks. This configuration can reduce the amount of data on which the eavesdropper may eavesdrop in the classical channel 2.

Example Functional Configuration

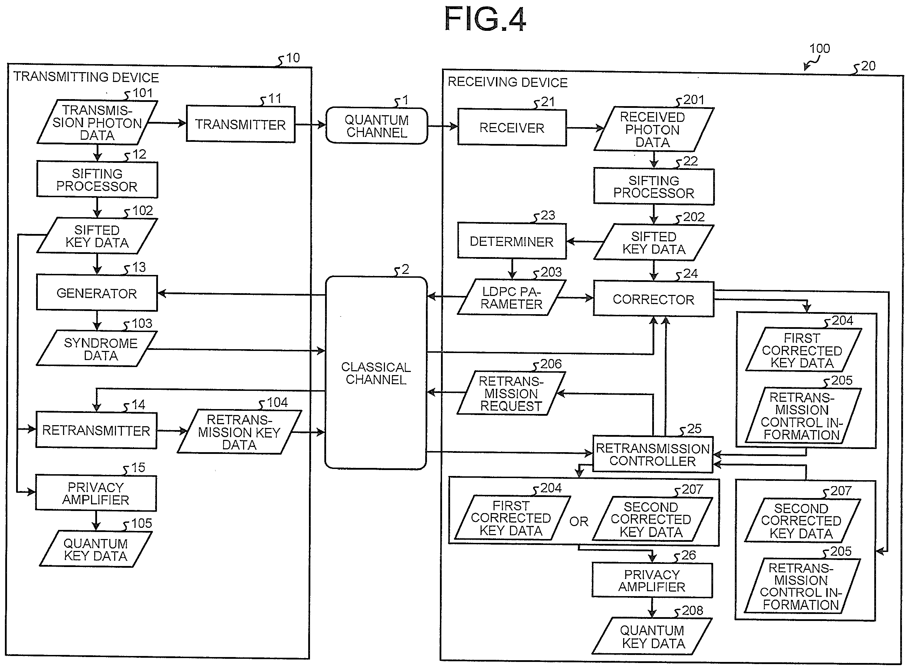

FIG. 4 is a diagram illustrating an example functional configuration of a quantum communication system 100 according to the second arrangement. The quantum communication system 100 according to the second arrangement includes the transmitting device 10 and the receiver 20. The transmitting device 10 and the receiver 20 are connected with each other through the quantum channel 1. The transmitting device 10 and the receiver 20 are connected with each other through the classical channel 2.

The transmitting device 10 includes the transmitter 11, the sifting processor 12, the generator 13, the retransmitter 14, and the privacy amplifier 15. The receiver 20 includes the receiver 21, the sifting processor 22, the determiner 23, a corrector 24, the retransmission controller 25, and the privacy amplifier 26.

The second arrangement differs from the first arrangement in the operations of the corrector 24 and the retransmission controller 25, and thus, the description of the second arrangement will focus on the operations of the corrector 24 and the retransmission controller 25.

The corrector 24 refers to the LDPC parameter 203 and the syndrome data 103 to correct errors in the sifted key data 202. The corrector 24 inputs the first corrected key data 204 and the retransmission control information 205 to the retransmission controller 25.

The retransmission control information 205 according to the second arrangement includes reliability information in addition to the success/failure information and the error rate described above. The reliability information indicates reliability of the first corrected key data 204 or the second corrected key data 207. The reliability information is computed from the posterior value (log-likelihood ratio) described above. A greater absolute value of the posterior value means a higher probability that the data included in the sifted key data 202 is 0 or that the data is 1, thus indicating a higher reliability of the data. In this regard, a threshold is set for the absolute value of the posterior value, and when the absolute value is below the threshold, the retransmission controller 25 determines that the data is not reliable. In other words, data, out of data included in each unsuccessfully error corrected block, determined to be unreliable will be the retransmission target data.

In this paragraph, the threshold of the posterior value will be considered. The posterior value is a log-likelihood ratio between the posterior probability that the data included in the sifted key data 202 is 1 and the posterior probability that the data included in the sifted key data 202 is 0. Suppose that, for example, the higher one of the posterior probabilities is 90% or greater and the lower one is 10% or smaller, and that the data is reliable, the threshold for the absolute value of the posterior value is 2.197 ($\approx$ log (0.9/0.1) = |log(0.1/0.9)|). Accordingly, when the absolute value of the posterior value is 2.197 or greater, the retransmission controller 25 determines that the data corresponding to the posterior value is reliable. When the absolute value of the posterior value is smaller than 2.197, the retransmission controller 25 determines that the data corresponding to the posterior value is not reliable.

The retransmission controller 25 receives the first corrected key data 204 and the retransmission control information 205 from the corrector 24. When the retransmission request condition is satisfied, the retransmission controller 25 determines the address of data reliability of which is below the threshold in each unsuccessfully error corrected block to be the retransmission target address information, and transmits the retransmission request 206 including the retransmission target address information to the transmitting device 10 through the classical channel 2.

Upon reception of the retransmission request 206 from the retransmission controller 25 in the receiver 20, the retransmitter 14 in the transmitting device 10 acquires the data specified by the retransmission target address information included in the retransmission request 206 from the sifted key data 102 and transmits the data to the retransmission controller 25 as the retransmission key data 104.

Upon reception of the retransmission key data 104 from the transmitting device 10 through the classical channel 2, the retransmission controller 25 inputs the retransmission key data 104 to the corrector 24.

Upon reception of the retransmission key data 104 from the retransmission controller 25, the corrector 24 replaces data, out of the data included in the first corrected key data 204, corresponding to the retransmission key data 104 with the retransmission key data 104, and generates replaced data. The corrector 24 then refers to the LDPC parameter 203 and the syndrome data 103 and performs error correction on the replaced data, thereby generating the second corrected key data 207 and the retransmission control information 205.

Upon reception of the second corrected key data 207 and the retransmission control information 205 from the corrector 24, the retransmission controller 25 performs the retransmission control process again. The retransmission controller 25 repeats the retransmission control process until the retransmission request condition is no longer satisfied. When the retransmission request condition is not satisfied, the retransmission controller 25 inputs the first corrected key data 204 generated through a single error correction process, or the second corrected key data 207 generated through two or more error correction processes to the privacy amplifier 26. Differences between the first arrangement and the second arrangement have been described.

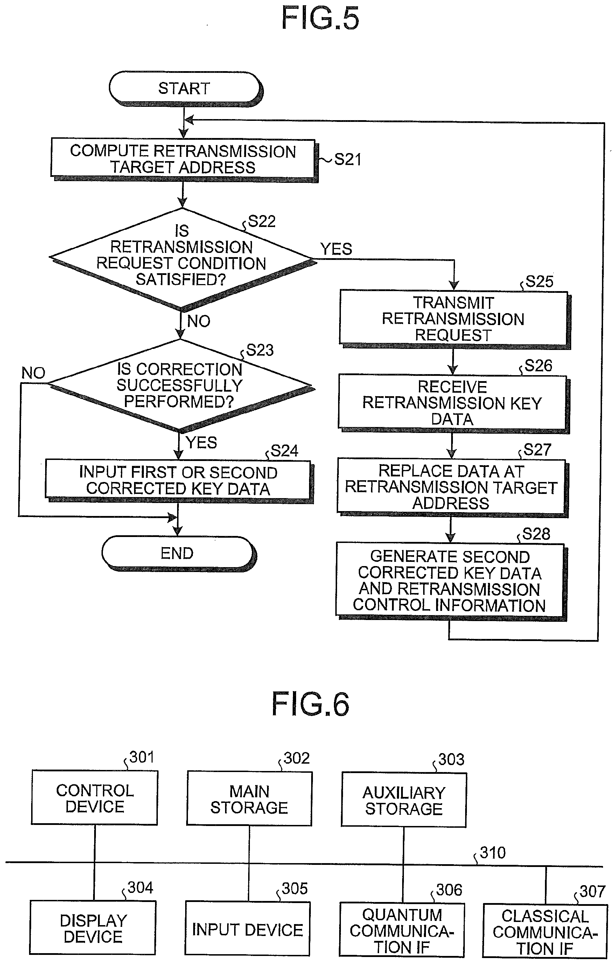

FIG. 5 is a flowchart illustrating an example retransmission control process according to the second arrangement. First, the retransmission controller 25 refers to the retransmission control information 205 (success/failure information and reliability information) described above, and computes address information indicating the address of data included in each unsuccessfully error corrected block, the data reliability of which is below the threshold, as the retransmission target address (Step S21).

The retransmission controller 25 then determines whether the aforementioned retransmission request condition is satisfied (Step S22). Condition (1) is the same as the condition described in the first arrangement. That is, if there is an error correction block that has been unsuccessfully error corrected, the retransmission controller 25 requests retransmission. Condition (2) is basically the same as the condition described in the first arrangement. In the second arrangement, the retransmission controller 25 may request retransmission a plurality of times. In this regard, when the sum of data lengths of the retransmission key data 104 that has been retransmitted so far is smaller than the certain value T, the retransmission controller 25 requests retransmission. With regard to the retransmission request condition, there are two possible combinations, a combination composed of Condition (1) and a combination composed of Conditions (1) and (2), in the same manner as in the first arrangement.

If the retransmission request condition is not satisfied (No at Step S22), the retransmission controller 25 determines whether all the error correction blocks that are the divided portions of the sifted key data 202 have been successfully error corrected (Step S23).

If all the error correction blocks have been successfully error corrected (Yes at Step S23), the retransmission controller 25 inputs the first corrected key data 204 or the second corrected key data 207 to the privacy amplifier 26 (Step S24).

If not all the error correction blocks are successfully error corrected (No at Step S23), the procedure is ended. In this case, the first corrected key data 204 or the second corrected key data 207 is not input to the privacy amplifier 26, and the sifted key data 102 is not input to the privacy amplifier 15. In other words, if the error correction is unsuccessfully performed and the retransmission request condition is not satisfied, the procedure is ended.

If the retransmission request condition is satisfied (Yes at Step S22), the retransmission controller 25 transmits the retransmission request 206 to the transmitting device 10 through the classical channel 2 (Step S25). The retransmission controller 25 then receives the retransmission key data 104 from the transmitting device 10 through the classical channel 2 (Step S26). Subsequently, the corrector replaces data (data at the retransmission target address) included in the data of each unsuccessfully error corrected block of the first corrected key data 204 with the retransmission key data 104, and generates replaced data (Step S27). The corrector 24 then refers to the LDPC parameter 203 and the syndrome data 103 and performs error correction on the replaced data, thereby generating the second corrected key data 207 and the retransmission control information 205 (Step S28). The procedure returns to Step S21.

From the second round of the procedure, the replaced data is generated at Step S27 by replacing data (data at the retransmission target address) included in the data of each unsuccessfully error corrected block of the second corrected key data 207 with the retransmission key data 104.

As described above, in the receiver 20 (quantum communication device) according to the second arrangement, the corrector 24 performs error correction on the sifted key data 202 (received key data) received from the transmitting device 10 through the quantum channel 1 and generates the first corrected key data 204. When the retransmission request condition is satisfied, the retransmission controller 25 transmits the retransmission request 206 including the retransmission target address information (in the second arrangement, an address of unreliable data in each unsuccessfully error corrected block) to the transmitting device 10 through the classical channel 2 (control channel), and receives the retransmission key data 104 corresponding to the retransmission target address information from the transmitting device 10 through the classical channel 2. The corrector 24 replaces corrected key data at the retransmission target address with the retransmission key data 104 to generate replaced data, and further corrects the replaced data.

The receiver 20 according to the second arrangement can prevent lowering of the generation rate of a cryptographic key if failures in error correction occur frequently. The receiver 20 according to the second arrangement can reduce the amount of data on which the eavesdropper may eavesdrop through the classical channel 2 compared to the first arrangement.

Lastly, an example hardware configuration of the transmitting device 10 and the receiver 20 according to the first and the second arrangements will be described.

Example Hardware Configuration

FIG. 6 is a diagram illustrating an example hardware configuration of main units of the transmitting device 10 and the receiver 20 according to the first and the second arrangements. The transmitting device 10 and the receiver 20 according to the first and the second arrangements each include a control device 301, a main storage 302, a auxiliary storage 303, a display device 304, an input device 305, a quantum communication interface (IF) 306, and a classical communication IF 307.

The control device 301, the main storage 302, the auxiliary storage 303, the display device 304, the input device 305, the quantum communication IF 306, and the classical communication IF 307 are connected with each other through a bus 310.

The control device 301 executes a computer program read from the auxiliary storage 303 onto the main storage 302. The main storage 302 may include, for example, a read only memory (ROM) and a random access memory (RAM). The auxiliary storage 303 may include, for example, a hard disk drive (HDD) and a memory card.

The display device 304 displays, for example, states of the transmitting device 10 and the receiver 20. The input device 305 receives inputs from a user.

The quantum communication IF 306 is an interface for connecting to the quantum channel 1. The classical communication IF 307 is an interface for connecting to the classical channel 2.

The transmitting device 10 and the receiver 20 according to the first and the second arrangements can be implemented by any device such as a general-purpose computer including the hardware configuration illustrated in FIG. 6.

The computer program executed by the transmitting device 10 and the receiver 20 according to the first and the second arrangements above is recorded in a computer-readable recording medium such as a compact disc read only memory (CD-ROM), a memory card, a compact disc recordable (CD-R), and a digital versatile disc (DVD), as an installable or executable file, and provided as a computer program product.

The computer program executed by the transmitting device 10 and the receiver 20 according to the first and the second arrangements above may be stored in a computer connected to a network such as the Internet and provided by being downloaded through the network.

Furthermore, the computer program executed by the transmitting device 10 and the receiver 20 according to the first and the second arrangements above may be provided through a network such as the Internet without being downloaded.

The computer program executed by the transmitting device 10 and the receiver 20 according to the first and the second arrangements above may be embedded and provided in a ROM, for example.

The computer program executed by the transmitting device 10 and the receiver 20 according to the first and the second arrangements above has a modular configuration including a function, out of the functions of the transmitting device 10 and the receiver 20 according to the first and the second arrangements, that can be implemented by the computer program.

The function implemented by the computer program is implemented such that the control device 301 reads the computer program from a storage medium such as the auxiliary storage 303 and executes it, and the function is loaded on the main storage 302. In other words, the function implemented by the computer program is generated on the main storage 302.

Some or all of the functions of the transmitting device 10 and the receiver 20 according to the first and the second arrangements above may be implemented by hardware such as an integrated circuit (IC). The IC is a processor that performs, for example, specialized processing.

When the functions are implemented by a plurality of processors, each processor may implement a single function, or may implement two or more functions.

The transmitting device 10 and the receiver 20 according to the first and the second arrangements above may be operated in any way. The transmitting device 10 and the receiver 20 according to the first and the second arrangements above may be operated, for example, as devices that configure a cloud system on a network.

According to the quantum communication device, the quantum communication system, and the quantum communication method of at least one arrangement described above, it is possible to prevent lowering of the generation rate of a cryptographic key if failures in error correction occur frequently.

While certain arrangements have been described, these arrangements have been presented by way of example only, and are not intended to limit the scope of the claims. Indeed, the novel devices described herein may be embodied in a variety of other forms; furthermore various omissions, substitutions and changes in the form of the devices described herein may be made.

## Claims

1.  A quantum communication device (20) comprising:

    a corrector (24; 24-1) configured to generate corrected key data by performing error correction on received key data received from a transmitting device through a quantum channel; and
    a retransmission controller (25) configured to

    transmit a retransmission request including retransmission target address information to the transmitting device through a control channel when a retransmission request condition is satisfied, and
receive retransmission key data corresponding to the retransmission target address information from the transmitting device through the control channel, **characterized in that**

the corrector (24; 24-1) divides the received key data into a plurality of error correction blocks and performs error correction on each error correction block,
the corrector (24) is a low-density parity-check decoder configured to output information indicating success or failure in error correction on each error correction block, corrected key data of each error correction block, and reliability of data included in the corrected key data,
the retransmission target address information indicates an address of data the reliability of which is below a threshold, the data being included in an error correction block that has been unsuccessfully error corrected, and after receiving the retransmission key data, the corrector (24; 24-2) replaces corrected key data corresponding to the retransmission target address information with the retransmission key data to generate replaced data, and performs error correction on the replaced data.

2. The quantum communication device (20) according to claim 1, wherein the reliability is an absolute value of a log-likelihood ratio between a posterior probability that data included in the received key data is 1 and a posterior probability that data included in the received key data is 0.

3. The quantum communication device (20) according to claim 1, wherein the retransmission request condition is that there is an error correction block that has been unsuccessfully error corrected.

4. The quantum communication device (20) according to any one of claims 1 to 3, wherein the retransmission request condition is that a sum of data lengths of the retransmission key data is smaller than a certain value.

5. The quantum communication device (20) according to claim 4, wherein the certain value is a difference between a data length of public data, the data length with which a compression rate in privacy amplification performed after the error correction is zero, and a data length of syndrome data transmitted in the error correction.

6. A quantum communication system (100) comprising:

a transmitting device (10); and
a receiving device (20) connected with the transmitting device (10) through a quantum channel (1), wherein the receiving device (20) includes

a corrector (24; 24-1) configured to generate corrected key data by performing error correction on received key data received from the transmitting device through the quantum channel; and
a retransmission controller (25) configured to

transmit a retransmission request including retransmission target address information to the transmitting device through a control channel when a retransmission request condition is satisfied, and
receive retransmission key data corresponding to the retransmission target address information from the transmitting device through the control channel,

**characterized in that**
the corrector (24; 24-1) divides the received key data into a plurality of error correction blocks and performs error correction on each error correction block,
the corrector (24) is a low-density parity-check decoder configured to output information indicating success or failure in error correction on each error correction block, corrected key data of each error correction block, and reliability of data included in the corrected key data,
the retransmission target address information indicates an address of data the reliability of which is below a threshold, the data being included in an error correction block that has been unsuccessfully error corrected, and after receiving the retransmission key data, the corrector (24; 24-2) replaces corrected key data corresponding to the retransmission target address information with the retransmission key data to generate replaced data, and performs error correction on the replaced data.

7. A quantum communication method comprising:

generating corrected key data by performing error correction on received key data received from a transmitting device through a quantum channel;

transmitting a retransmission request including retransmission target address information to the transmitting device through a control channel when a retransmission request condition is satisfied (S1, S4), and receiving retransmission key data corresponding to the retransmission target address information from the transmitting device through the control channel (S5);

**characterized in that**

the quantum communication method further comprises

dividing the received key data into a plurality of error correction blocks and performing error correction on each error correction block, wherein

the generating of corrected key data is performed by a corrector (24; 24-1) that is a low-density parity-check decoder configured to output information indicating success or failure in error correction on each error correction block, corrected key data of each error correction block, and reliability of data included in the corrected key data, the retransmission target address information indicates an address of data the reliability of which is below a threshold, the data being included in an error correction block that has been unsuccessfully error corrected, and after receiving the retransmission key data, corrected key data corresponding to the retransmission target address information is replaced with the retransmission key data to generate replaced data, and error correction is performed on the replaced data .

**Patentansprüche**

1.  Quantenkommunikationsvorrichtung (20), umfassend:

    einen Korrektor (24; 24-1), konfiguriert zum Erzeugen korrigierter Schlüsseldaten durch Durchführen von Fehlerkorrektur an empfangenen Schlüsseldaten, empfangen von einer übertragenden Vorrichtung durch einen Quantenkanal; und
    eine Neuübertragungssteuerung (25), konfiguriert zum
    Übertragen einer Neuübertragungsanforderung, enthaltend Neuübertragungsziel-Adressinformationen, an die übertragende Vorrichtung durch einen Steuerkanal, wenn eine Neuübertragungsanforderungsbedingung befriedigt ist, und
    Empfangen von Neuübertragungsschlüsseldaten korrespondierend mit den Neuübertragungsziel-Adressinformationen von der übertragenden Vorrichtung durch den Steuerkanal,
    **dadurch gekennzeichnet, dass**
    der Korrektor (24; 24-1) die empfangenen Schlüsseldaten in eine Vielzahl von Fehlerkorrekturblöcken aufteilt und Fehlerkorrektur an jedem Fehlerkorrekturblock durchführt,
    der Korrektor (24) ein Paritätsprüfungsdecodierer niedriger Dichte ist, konfiguriert zum Ausgeben von Informationen, die Erfolg oder Fehlschlag bei der Fehlerkorrektur an jedem Fehlerkorrekturblock angeben, korrigierten Schlüsseldaten jedes Fehlerkorrekturblocks und der Zuverlässigkeit von in den korrigierten Schlüsseldaten enthaltenen Daten,
    die Neuübertragungsziel-Adressinformationen eine Adresse von Daten angeben, deren Zuverlässigkeit unter einem Schwellenwert ist, wobei die Daten in einem Fehlerkorrekturblock enthalten sind, der nicht erfolgreich fehlerkorrigiert wurde, und
    der Korrektor (24; 24-2) nach Empfangen der Neuübertragungsschlüsseldaten korrigierte Schlüsseldaten korrespondierend mit den Neuübertragungsziel-Adressinformationen durch die Neuübertragungsschlüsseldaten ersetzt, um ersetzte Daten zu erzeugen, und Fehlerkorrektur an den ersetzten Daten durchführt.

2.  Quantenkommunikationsvorrichtung (20) nach Anspruch 1, wobei die Zuverlässigkeit ein Absolutwert eines Log-Wahrscheinlichkeitsverhältnisses zwischen einer a posteriori-Wahrscheinlichkeit, dass in den empfangenen Schlüsseldaten enthaltene Daten 1 sind, und einer a posteriori-Wahrscheinlichkeit, dass in den empfangenen Schlüsseldaten enthaltene Daten 0 sind, ist.

3.  Quantenkommunikationsvorrichtung (20) nach Anspruch 1, wobei die Neuübertragungsanforderungsbedingung ist, dass ein Fehlerkorrekturblock vorhanden ist, der nicht erfolgreich fehlerkorrigiert wurde.

4.  Quantenkommunikationsvorrichtung (20) nach einem der Ansprüche 1 bis 3, wobei die Neuübertragungsanforderungsbedingung ist, dass eine Summe von Datenlängen der Neuübertragungsschlüsseldaten kleiner als ein bestimmter Wert ist.

**5.** Quantenkommunikationsvorrichtung (20) nach Anspruch 4, wobei der bestimmte Wert eine Differenz ist zwischen einer Datenlänge von öffentlichen Daten, der Datenlänge, mit der eine Kompressionsrate in einem Vertraulichkeitsverstärkungsvorgang, durchgeführt nach der Fehlerkorrektur, null ist, und einer Datenlänge von bei der Fehlerkorrektur übertragenen Syndromdaten.

**6.** Quantenkommunikationssystem (100), umfassend:

eine übertragende Vorrichtung (10); und
eine empfangende Vorrichtung (20), verbunden mit der übertragenden Vorrichtung (10) durch einen Quantenkanal (1), wobei
die empfangende Vorrichtung (20) enthält
einen Korrektor (24; 24-1), konfiguriert zum Erzeugen korrigierter Schlüsseldaten durch Durchführen von Fehlerkorrektur an empfangenen Schlüsseldaten, empfangen von der übertragenden Vorrichtung durch den Quantenkanal; und
eine Neuübertragungssteuerung (25), konfiguriert zum
Übertragen einer Neuübertragungsanforderung, enthaltend Neuübertragungsziel-Adressinformationen, an die übertragende Vorrichtung durch einen Steuerkanal, wenn eine Neuübertragungsanforderungsbedingung befriedigt ist, und
Empfangen von Neuübertragungsschlüsseldaten korrespondierend mit den Neuübertragungsziel-Adressinformationen von der übertragenden Vorrichtung durch den Steuerkanal,
**dadurch gekennzeichnet, dass**
der Korrektor (24; 24-1) die empfangenen Schlüsseldaten in eine Vielzahl von Fehlerkorrekturblöcken aufteilt und Fehlerkorrektur an jedem Fehlerkorrekturblock durchführt,
der Korrektor (24) ein Paritätsprüfungsdecodierer niedriger Dichte ist, konfiguriert zum Ausgeben von Informationen, die Erfolg oder Fehlschlag bei der Fehlerkorrektur an jedem Fehlerkorrekturblock angeben, korrigierter Schlüsseldaten jedes Fehlerkorrekturblocks und der Zuverlässigkeit von in den korrigierten Schlüsseldaten enthaltenen Daten,
die Neuübertragungsziel-Adressinformationen eine Adresse von Daten angeben, deren Zuverlässigkeit unter einem Schwellenwert ist, wobei die Daten in einem Fehlerkorrekturblock enthalten sind, der nicht erfolgreich fehlerkorrigiert wurde, und
der Korrektor (24; 24-2) nach Empfangen der Neuübertragungsschlüsseldaten korrigierte Schlüsseldaten korrespondierend mit den Neuübertragungsziel-Adressinformationen durch die Neuübertragungsschlüsseldaten ersetzt, um ersetzte Daten zu erzeugen, und Fehlerkorrektur an den ersetzten Daten durchführt.

**7.** Quantenkommunikationsverfahren, umfassend:

Erzeugen korrigierter Schlüsseldaten durch Durchführen von Fehlerkorrektur an empfangenen Schlüsseldaten, empfangen von einer übertragenden Vorrichtung durch einen Quantenkanal;
Übertragen einer Neuübertragungsanforderung, enthaltend Neuübertragungsziel-Adressinformationen, an die übertragende Vorrichtung durch einen Steuerkanal, wenn eine Neuübertragungsanforderungsbedingung befriedigt ist (S1, S4), und Empfangen von Neuübertragungsschlüsseldaten korrespondierend mit den Neuübertragungsziel-Adressinformationen von der übertragenden Vorrichtung durch den Steuerkanal (S5);
**dadurch gekennzeichnet, dass** das Quantenkommunikationsverfahren ferner umfasst
Aufteilen der empfangenen Schlüsseldaten in eine Vielzahl von Fehlerkorrekturblöcken und Durchführen von Fehlerkorrektur an jedem Fehlerkorrekturblock, wobei
das Erzeugen von korrigierten Daten durch einen Korrektor (24; 24-1) durchgeführt wird, der ein Paritätsprüfungsdecodierer niedriger Dichte ist, konfiguriert zum Ausgeben von Informationen, die Erfolg oder Fehlschlag bei der Fehlerkorrektur an jedem Fehlerkorrekturblock angeben, korrigierten Schlüsseldaten jedes Fehlerkorrekturblocks und der Zuverlässigkeit von in den korrigierten Schlüsseldaten enthaltenen Daten,
die Neuübertragungsziel-Adressinformationen eine Adresse von Daten angeben, deren Zuverlässigkeit unter einem Schwellenwert ist, wobei die Daten in einem Fehlerkorrekturblock enthalten sind, der nicht erfolgreich fehlerkorrigiert wurde, und
nach dem Empfangen der Neuübertragungsschlüsseldaten, korrigierte Schlüsseldaten korrespondierend mit den Neuübertragungsziel-Adressinformationen durch die Neuübertragungsschlüsseldaten ersetzt werden, um ersetzte Daten zu erzeugen, und Fehlerkorrektur an den ersetzten Daten durchgeführt wird.

**EP 3 416 332 B1**

**Revendications**

1. Dispositif de communication quantique (20) comprenant :

   un correcteur (24 ; 24 - 1) qui est configuré pour générer des données de clé corrigées en réalisant une correction d'erreurs sur des données de clé reçues qui sont reçues depuis un dispositif d'émission par l'intermédiaire d'un canal quantique ; et
   un contrôleur de réémission (25) qui est configuré pour :

   émettre une requête de réémission qui inclut des informations d'adresse cible de réémission sur le dispositif d'émission par l'intermédiaire d'un canal de commande lorsqu'une condition de requête de réémission est satisfaite ; et
   recevoir des données de clé de réémission qui correspondent aux informations d'adresse cible de réémission en provenance du dispositif d'émission par l'intermédiaire du canal de commande ;
   **caractérisé en ce que** :

   le correcteur (24 ; 24 - 1) divise les données de clé reçues en une pluralité de blocs de correction d'erreurs et réalise une correction d'erreurs sur chaque bloc de correction d'erreurs ;
   le correcteur (24) est un décodeur à contrôle de parité faible densité qui est configuré pour émettre en sortie des informations qui indiquent un succès ou un échec en termes de correction d'erreurs sur chaque bloc de correction d'erreurs, des données de clé corrigées de chaque bloc de correction d'erreurs et la fiabilité de données qui sont incluses dans les données de clé corrigées ;
   les informations d'adresse cible de réémission indiquent une adresse de données dont la fiabilité est en deçà d'un seuil, les données étant incluses à l'intérieur d'un bloc de correction d'erreurs qui a été corrigé en termes d'erreurs sans succès ; et
   après la réception des données de clé de réémission, le correcteur (24 ; 24 - 2) remplace les données de clé corrigées qui correspondent aux informations d'adresse cible de réémission par les données de clé de réémission pour générer des données remplacées, et réalise une correction d'erreurs sur les données remplacées.

2. Dispositif de communication quantique (20) selon la revendication 1, dans lequel la fiabilité est une valeur absolue d'un rapport de log-vraisemblance entre une probabilité a posteriori que des données qui sont incluses à l'intérieur des données de clé reçues soient égales à 1 et une probabilité a posteriori que des données qui sont incluses à l'intérieur de données de clé reçues soient égales à 0.

3. Dispositif de communication quantique (20) selon la revendication 1, dans lequel la condition de requête de réémission consiste en ce qu'il y a un bloc de correction d'erreurs qui a été corrigé en termes d'erreurs sans succès.

4. Dispositif de communication quantique (20) selon l'une quelconque des revendications 1 à 3, dans lequel la condition de requête de réémission consiste en ce qu'une somme de longueurs de données des données de clé de réémission est inférieure à une certaine valeur.

5. Dispositif de communication quantique (20) selon la revendication 4, dans lequel la certaine valeur est une différence entre une longueur de données de données publiques, la longueur de données en lien avec laquelle un taux de compression lors d'une amplification de confidentialité qui est réalisée après la correction d'erreurs, est égal à zéro et une longueur de données de données de syndrome qui sont émises lors de la correction d'erreurs.

6. Système de communication quantique (100) comprenant :

   un dispositif d'émission (10) ; et
   un dispositif de réception (20) qui est connecté au dispositif d'émission (10) par l'intermédiaire d'un canal quantique (1) ; dans lequel :
   le dispositif de réception (20) inclut :

   un correcteur (24 ; 24 - 1) qui est configuré pour générer des données de clé corrigées en réalisant une correction d'erreurs sur des données de clé reçues qui sont reçues depuis le dispositif d'émission par l'intermédiaire du canal quantique ; et
   un contrôleur de réémission (25) qui est configuré pour :

13

émettre une requête de réémission qui inclut des informations d'adresse cible de réémission sur le dispositif d'émission par l'intermédiaire d'un canal de commande lorsqu'une condition de requête de réémission est satisfaite ; et

recevoir des données de clé de réémission qui correspondent aux informations d'adresse cible de réémission en provenance du dispositif d'émission par l'intermédiaire du canal de commande ; **caractérisé en ce que** :

le correcteur (24 ; 24 - 1) divise les données de clé reçues selon une pluralité de blocs de correction d'erreurs et réalise une correction d'erreurs sur chaque bloc de correction d'erreurs ;

le correcteur (24) est un décodeur à contrôle de parité faible densité qui est configuré pour émettre en sortie des informations qui indiquent un succès ou un échec en termes de correction d'erreurs sur chaque bloc de correction d'erreurs, des données de clé corrigées de chaque bloc de correction d'erreurs et la fiabilité de données qui sont incluses dans les données de clé corrigées ;

les informations d'adresse cible de réémission indiquent une adresse de données dont la fiabilité est en deçà d'un seuil, les données étant incluses à l'intérieur d'un bloc de correction d'erreurs qui a été corrigé en termes d'erreurs sans succès ; et

après la réception des données de clé de réémission, le correcteur (24 ; 24 - 2) remplace des données de clé corrigées qui correspondent aux informations d'adresse cible de réémission par les données de clé de réémission pour générer des données remplacées, et réalise une correction d'erreurs sur les données remplacées.

7. Procédé de communication quantique comprenant :

la génération de données de clé corrigées en réalisant une correction d'erreurs sur des données de clé reçues qui sont reçues depuis un dispositif d'émission par l'intermédiaire d'un canal quantique ;

l'émission d'une requête de réémission qui inclut des informations d'adresse cible de réémission sur le dispositif d'émission par l'intermédiaire d'un canal de commande lorsqu'une condition de requête de réémission est satisfaite (S1, S4), et la réception de données de clé de réémission qui correspondent aux informations d'adresse cible de réémission en provenance du dispositif d'émission par l'intermédiaire du canal de commande (S5) ; **caractérisé en ce que** le procédé de communication quantique comprend en outre :

la division des données de clé reçues en une pluralité de blocs de correction d'erreurs et la réalisation d'une correction d'erreurs sur chaque bloc de correction d'erreurs ; dans lequel :

la génération de données de clé corrigées est réalisée par un correcteur (24 ; 24 - 1) qui est un décodeur à contrôle de parité faible densité qui est configuré pour émettre en sortie des informations qui indiquent un succès ou un échec en termes de correction d'erreurs sur chaque bloc de correction d'erreurs, des données de clé corrigées de chaque bloc de correction d'erreurs et la fiabilité de données qui sont incluses dans les données de clé corrigées ;

les informations d'adresse cible de réémission indiquent une adresse de données dont la fiabilité est en deçà d'un seuil, les données étant incluses à l'intérieur d'un bloc de correction d'erreurs qui a été corrigé en termes d'erreurs sans succès ; et

après la réception des données de clé de réémission, des données de clé corrigées qui correspondent aux informations d'adresse cible de réémission sont remplacées par les données de clé de réémission pour générer des données remplacées, et une correction d'erreurs est réalisée sur les données remplacées.

# FIG.1

100

# FIG.2

# FIG.3

START

S1
IS RETRANSMISSION REQUEST CONDITION SATISFIED?

YES

NO

S2
IS CORRECTION SUCCESSFULLY PERFORMED?

NO

YES

S3
INPUT FIRST CORRECTED KEY DATA

S4
TRANSMIT RETRANSMISSION REQUEST

S5
RECEIVE RETRANSMISSION KEY DATA

S6
GENERATE SECOND CORRECTED KEY DATA

S7
INPUT SECOND CORRECTED KEY DATA

END

# FIG.4

# FIG.5

```
                    START

            COMPUTE RETRANSMISSION       ~S21
               TARGET ADDRESS

                    IS              S22
                RETRANSMISSION                YES
              REQUEST CONDITION  ──────────────────────►   TRANSMIT        S25
                 SATISFIED?                              RETRANSMISSION
                                                           REQUEST
                    NO
                                                            RECEIVE        S26
    NO          IS CORRECTION    S23                   RETRANSMISSION KEY
    ◄──────     SUCCESSFULLY                                 DATA
                PERFORMED?
                                                        REPLACE DATA AT     S27
                    YES                                RETRANSMISSION TARGET
                                                           ADDRESS
            INPUT FIRST OR SECOND   S24
              CORRECTED KEY DATA                        GENERATE SECOND     S28
                                                       CORRECTED KEY DATA
                                                       AND RETRANSMISSION
                    END                                CONTROL INFORMATION
```

# FIG.6

```
    CONTROL        301      MAIN        302     AUXILIARY    303
    DEVICE                 STORAGE              STORAGE
                                                                        310

    DISPLAY        304    INPUT DEVICE   305    QUANTUM      306   CLASSICAL     307
    DEVICE                                    COMMUNICA-         COMMUNICA-
                                                TION IF            TION IF
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007071245 A

- JP 2011166292 B

**Non-patent literature cited in the description**

- **NAKASSIS et al.** Expeditious reconciliation for practical quantum key distribution. *SPIE, PO Box 10 Bellingham EA 98227-0010*

- **YOON et al.** Efficient information reconciliation with turbo codes over the quantum channel. *International Conference on ICT Convergence (ICTC) IEEE,* 2013, 1091-1092